# EUROPÄISCHE PATENTSCHRIFT

(11) **EP 3 620 836 B1**
(45) Veröffentlichungstag und Bekanntmachung des Hinweises auf die Patenterteilung: **27.11.2024**
(21) Anmeldenummer: 18192742.7
(22) Anmeldetag: 05.09.2018
(51) Int. Cl.: G02B 7/18, G03B 21/16, G02B 26/08, G03B 21/00

(54) **DMD-MODUL**
DMD MODULE
MODULE DMD

(43) Veröffentlichungstag der Anmeldung: 11.03.2020
(73) Patentinhaber: ZKW Group GmbH, 3250 Wieselburg (AT)
(72) Erfinder: Plank, Josef, 3251 Purgstall/Erlauf (AT); Emmerich, Albrecht, 1150 Wien (AT); Lahmer, Martin, 3662 Münichreith (AT); Kakuska, Daniel, 1220 Wien (AT); Haiden, Christoph, 2630 Ternitz (AT); Karlinger, Günter, 3254 Bergland (AT); Mitterlehner, Stefan, 3240 Mank (AT)
(74) Vertreter: Patentanwaltskanzlei Matschnig & Forsthuber OG

(56) Entgegenhaltungen:
- WO-A2-2012/131007
- US-B2- 7 232 332
- US-B2- 7 815 316

## Beschreibung

Die Erfindung bezieht sich auf ein DMD-Modul, bestehend aus einem Halterahmen, einem in diesen eingesetzten DMD-Element, einem plattenförmigen Peltierelement, welches mit einer Seite an der Rückseite des DMD-Elementes wärmeleitend anliegt und elektrische Anschlüsse aufweist, und mit einem Kühlkörper, welcher in wärmeleitendem Kontakt mit der anderen Seite des Peltierelements steht.

Derartige DMD-Module - DMD steht für Digital Mirror Device, im deutschen Sprachraum auch Mikrospiegelaktoren genannt - werden beispielsweise bei Fahrzeugscheinwerfern eingesetzt und enthalten das eigentliche DMD-Element, sowie zu dessen Kühlung einen Kühlkörper. Das DMD-Element bildet über einen scannenden Laserstrahl ein Leuchtbild auf einem Phosphor, welches über eine Optik in den Verkehrsraum vor dem Fahrzeug projiziert wird. Dabei werden eine Lasereinrichtung sowie der Mikrospiegelaktor üblicherweise von einem Mikrocomputer angesteuert. Derartige DMD Module - DMD steht für Digital Mirror Device, im deutschen Sprachraum auch digitale Mikrospiegelvorrichtung genannt, werden beispielsweise bei Fahrzeugscheinwerfern eingesetzt und enthalten zu dessen Kühlung einen Kühlkörper. Das DMD-Element generiert über eine Vielzahl von kleinen Mikrospiegelaktoren das gewünschte Lichtbild in der Linsen-Brennebene, wobei die Linse das Zwischenlichtbild dann scharf auf der Straße abbildet. Die Beleuchtung des DMD Elements kann beispielsweise über LEDs erfolgen. Darüber hinaus sind auch Laserlichtquellen denkbar. Alternativ dazu kann auch eine Kombination aus beiden zweckmäßig sein um eine gewünschte Lichtverteilung zu gewährleisten. Dabei werden die Lichtquellen sowie die einzelnen Mikrospiegelaktoren üblicherweise von einem Mikrocomputer angesteuert.

Ein DMD-Modul der gegenständlichen Art ist in dem Dokument US 7,815,316 B2 beschrieben, wobei ersichtlich ist, dass zur verbesserten Kühlung des DMD-Elements zwischen die Rückseite des DMD-Elements und den Kühlkörper ein Peltierelement eingefügt ist, wobei die Wärme im Kühlbetrieb an dessen heißen Seite an den Kühlkörper abgegeben wird und die Wärme des DMD-Elements zur kühlen Seite des Peltierelements geführt wird.

Die Montage des Peltierelements in dem DMD-Modul erfordert jedoch zusätzliche Arbeitsschritte, wozu auch das elektrische Verbinden und Herausführen der elektrischen Anschlüsse des Peltierelements zu zählen ist.

Eine Aufgabe der Erfindung liegt darin, den Aufbau eines DMD-Moduls in dieser Hinsicht zu vereinfachen, um den Zusammenbau ökonomischer zu gestalten und dadurch Kosten zu sparen. Auch soll die Ausfallsicherheit erhöht werden.

Diese Aufgabe wird mit einem DMD-Modul der eingangs genannten Art gelöst, bei welchem erfindungsgemäß zwischen dem DMD-Element und dem Kühlkörper eine Leiterplatte angeordnet ist, welche eine Ausnehmung für das Peltierelement aufweist und zur elektrischen Verbindung des Peltierelements mit der Leiterplatte Federkontakte und diesen zugeordnete Kontaktflächen vorgesehen sind, wobei bei zusammengesetztem DMD-Modul die Federkontakte federnd an den Kontaktflächen anliegen.

Erfindungsgemäß ist vorgesehen, dass die elektrischen Anschlüsse des Peltierelements zumindest zwei elektrischen Kontaktflächen umfassen und auf der Leiterplatte zur Stromzuführung an das Peltierelement zumindest zwei Federkontakte angeordnet sind.

Für den einfachen Zusammenbau sind erfindungsgemäß die zumindest zwei elektrischen Kontaktflächen auf einem von dem Peltierelement vorspringenden Kontaktträger angeordnet.

Falls die elektrischen Anschlüsse des Peltierelements zwei elektrische Kontaktflächen umfassen und jeder Kontaktfläche zwei Federkontakte zugeordnet sind, wird die Stromzuführung sicherer und auch die Ausfallsicherheit erhöht und dem Peltierelement können auch höhere Ströme zugeführt werden.

Im Sinne eines raschen Justierens des Aufbaus ist erfindungsgemäß weiters vorgesehen, dass von dem Halterahmen zumindest zwei, die Leiterplatte mit den zumindest zwei Federkontakten sowie den Kühlkörper durchsetzende Haltebolzen abstehen, welche an ihren freien Enden Anschläge für Schraubenfedern aufweisen, die zwischen den Anschlägen und dem Kühlkörper liegen und den Kühlkörper, das Peltierelement und das DMD-Element federnd zusammenhalten.

Dabei ist es günstig, falls die Anschläge je am äußeren Ende von Schraubbolzen sitzen, die in die Haltebolzen eingeschraubt sind.

Die Erfindung samt weiteren Vorteilen ist im Folgenden an Hand einer beispielsweisen Ausführungsform erläutert, die in der Zeichnung veranschaulicht ist. In dieser zeigen
Fig. 1 in schaubildlicher Darstellung und in zusammengesetzten Zustand ein DMD-Modul nach der Erfindung,
Fig. 2 das DMD-Modul in einer Darstellung wie in Fig. 1, jedoch in Querrichtung geschnitten,
Fig. 3 das DMD-Modul in einer Darstellung wie in Fig. 1, jedoch in Längsrichtung geschnitten,
Fig. 4 in schaubildlicher Darstellung schräg von der Seite ein teilweise zusammengesetztes DMD-Modul nach der Erfindung, noch ohne Peltierelement,
Fig. 5 schaubildlich in Alleinstellung ein Peltierelement des DMD-Moduls der Fig. 1 bis 4,
Fig. 6 in schaubildlicher Darstellung schräg von oben ein teilweise zusammengesetztes DMD-Modul nach der Erfindung, mit eingelegtem Peltierelement,
Fig. 7 in einer Darstellung wie in Fig. 6 ein teilweise zusammengesetztes DMD-Modul mit eingelegtem Peltierelement,
Fig. 8 in einer Darstellung wie Fig. 6 das DMD-Modul mit eingelegtem Peltierelement und aufgesetztem Kühlkörper,
Fig. 9 schaubildlich ein DMD-Element mit einer zugehörigen Leiterplatte in einer Ansicht - bezogen auf die Fig. 1 - von unten,
Fig. 10 schaubildlich ein DMD-Element in Alleinstellung in einer Ansicht - bezogen auf Fig. 1 - von unten, und
Fig. 11 schaubildlich ein DMD-Element in Alleinstellung in einer Ansicht - bezogen auf Fig. 1 - von oben.

Begriffe hinsichtlich des Ortes oder einer Orientierung, wie beispielsweise "oben", "unten", "vorne", "darunter", "darüber" etc. werden in der Beschreibung lediglich zur Vereinfachung gewählt und beziehen sich möglicherweise auf die Darstellung in der Zeichnung nicht jedoch notwendigerweise auf eine Gebrauchs- oder Einbaulage.

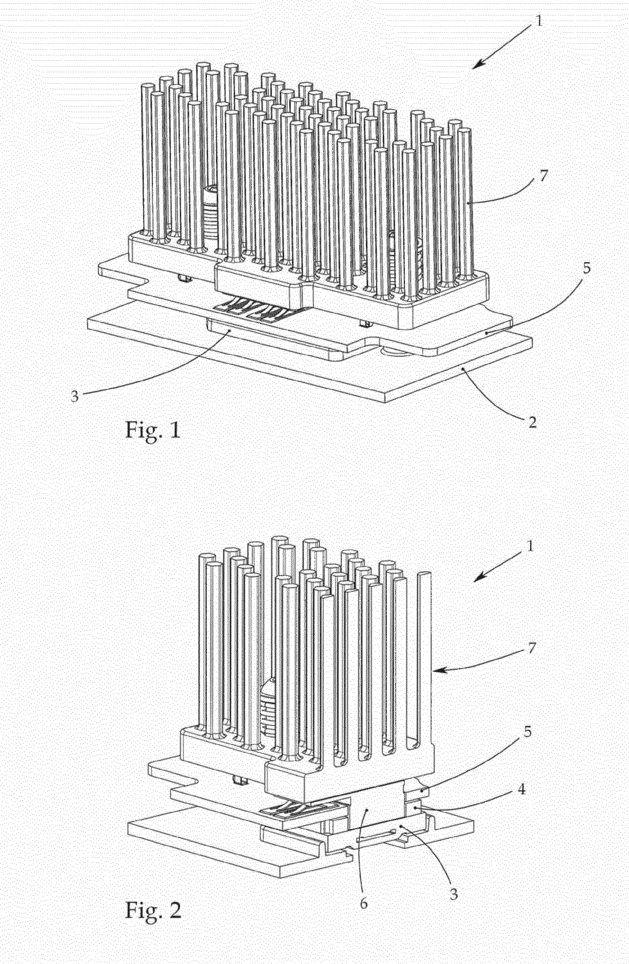

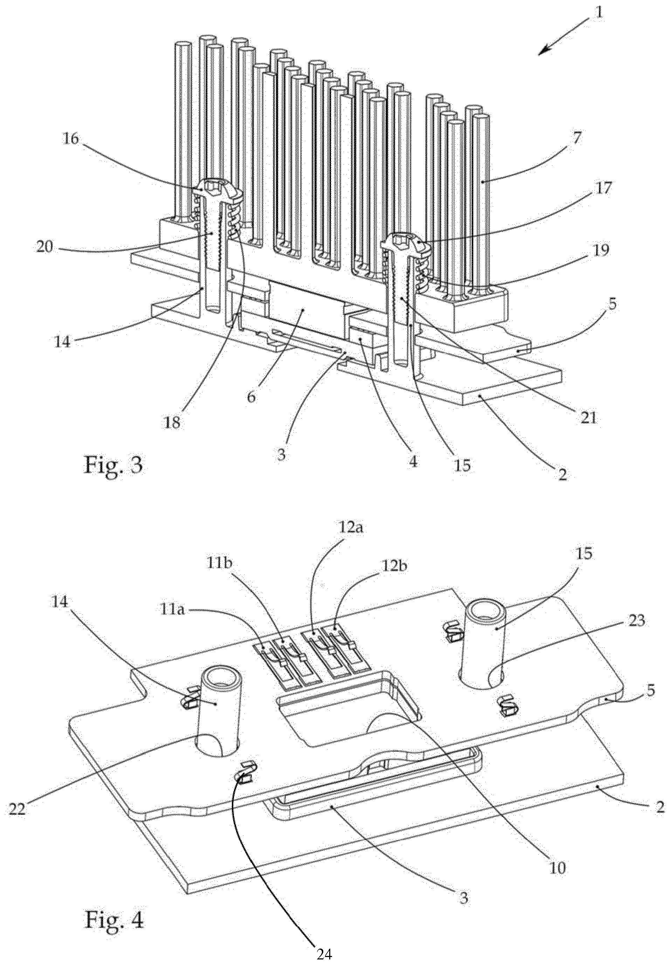

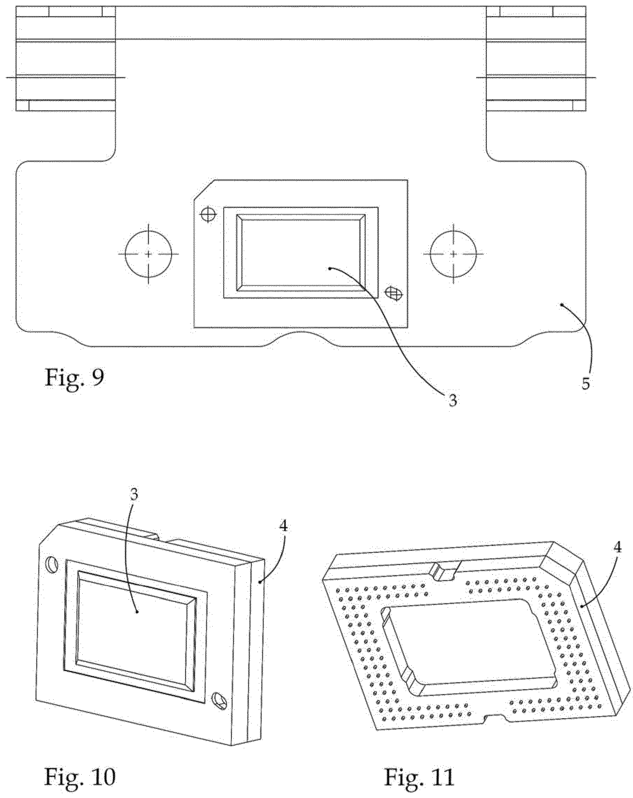

Die Fig. 1, 2, 3 und 8 zeigen je ein fertig zusammengesetztes DMD-Modul, wogegen die Fig. 4 bis 7 zur Veranschaulichung des Zusammenbaus des DMD-Moduls dienen sollen und sich die Fig. 9 bis 11 auf das DMD-Element als solches beziehen.

In den Figuren erkennt man ein DMD-Modul **1** nach der Erfindung, mit einem Halterahmen **2,** in den ein DMD-Element **3** eingesetzt ist. Das DMD-Element 3 besitzt einen Sockel **4,** welcher durch Löten mit einer Leiterplatte **5** verbunden ist, wobei der eigentliche DMD-Chip mit Pins in den Sockel 4 gesteckt ist und im Sockel 4 mittels Federklemmen gehalten ist. Siehe insbesondere Fig. 1 bis 3 und Fig. 9 bis 11.

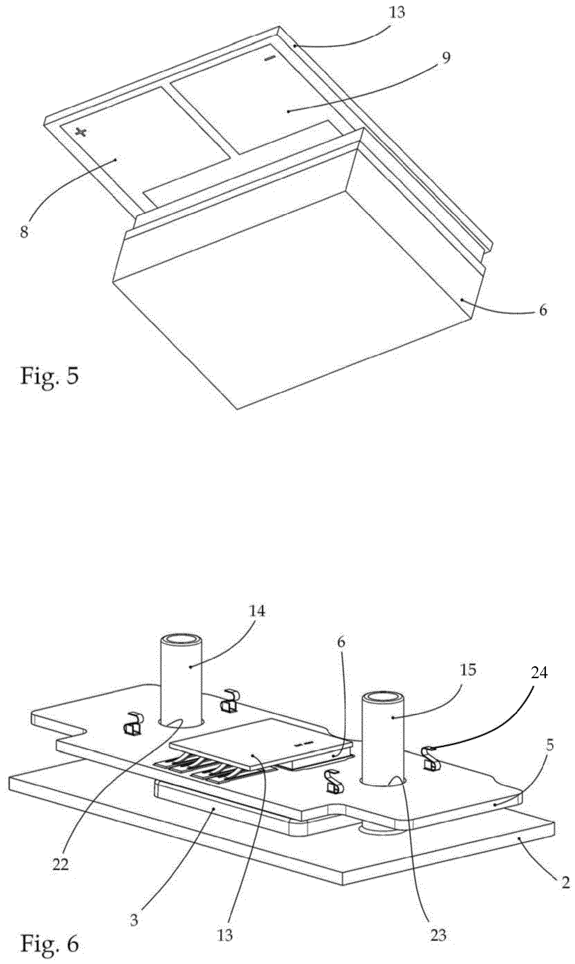

Weiters trägt der Halterahmen 2 ein Peltierelement **6** und an dieses anschließend einen Kühlkörper **7.** Das Peltierelement 6 weist elektrische Anschlüsse auf, die im vorliegenden Beispiel als zwei elektrische Kontaktflächen **8, 9** ausgebildet sind (Fig. 5).

Zwischen dem DMD-Element 3 und dem Kühlkörper 7 ist die Leiterplatte 5 angeordnet, welche eine Ausnehmung **10** (Fig. 6) für das Peltierelement 6 aufweist und auf welcher zur Stromzuführung an das Peltierelement 6 Federkontakte **11 a,b, 12 a,b** angeordnet sind. Wie aus Fig. 6 gut ersichtlich, sind bei dem gezeigten Beispiel je zwei Federkontakte 11 a,b der einen Kontaktfläche 8 und je zwei Federkontakte 12 a,b der anderen Kontaktfläche 9 zugeordnet, um durch die Verdoppelung der parallel geschalteten Federkontakte eine sicherere Kontaktierung zu erreichen und um - falls erforderlich - dem Peltierelement auch höhere Ströme zuführen zu können. Wie am besten aus Fig. 5 ersichtlich, sind die elektrischen Kontaktflächen 6, 7 auf einem von dem Peltierelement 4 vorspringenden Kontaktträger **13** angeordnet. Es sollte klar sein, dass die Kontaktflächen auf der Leiterplatte angeordnet sein könnten, wobei in diesem Fall die Federkontakte an dem Peltierelement oder einem Kontaktträger des Peltierelements sitzen könnten. Es sollte klar sein, dass je nach den spezifischen Erfordernissen die Anzahl der Kontaktflächen ebenso variieren kann, wie die Anzahl der Kontaktfedern.

Von dem Halterahmen 2 stehen zumindest zwei, die Leiterplatte 5 mit den zumindest zwei Federkontakten 11a,b, 12a,b sowie den Kühlkörper 7 durchsetzende Haltebolzen **14, 15** ab, welche an ihren freien Enden Anschläge **16, 17** für Schraubenfedern **18, 19** aufweisen, die zwischen den Anschlägen 16, 17 und dem Kühlkörper 7 liegen und den Kühlkörper 7, das Peltierelement 6 und das DMD-Element 3 federnd zusammenhalten (siehe insbesondere Fig. 3, 4). Die Anschläge 16, 17 sitzen je am äußeren Ende von Schraubbolzen **20, 21,** welche in die Haltebolzen 14, 15 eingeschraubt sind.

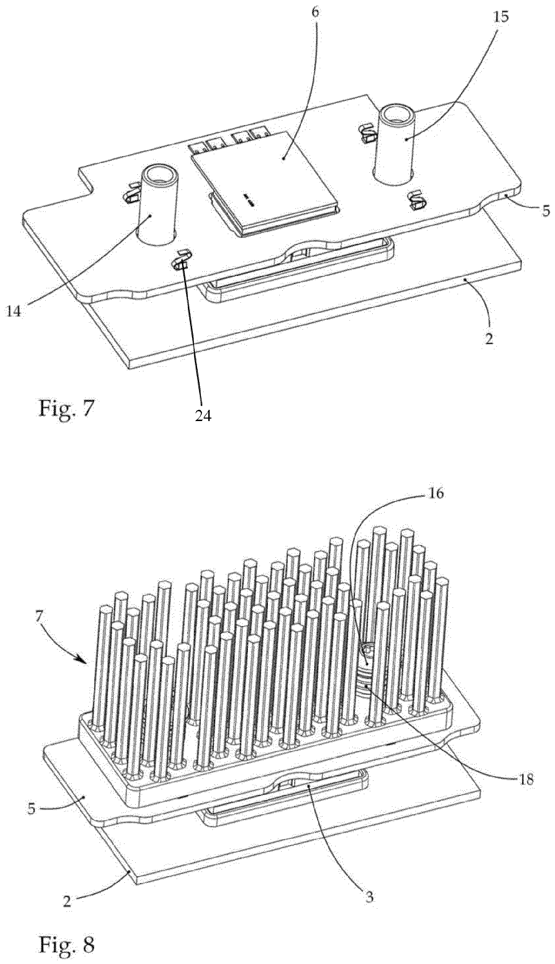

Was den Zusammenbau des DMD-Moduls betrifft, so zeigt Fig. 4 den Halterahmen 2 mit den von ihm in der Zeichnung nach oben abstehenden Haltebolzen 14, 15, die aufgesetzte Leiterplatte 5 samt dem auf ihr sitzenden DMD-Element 3, welche außer der Ausnehmung 10 Bohrungen **22, 23** besitzt, durch welche die Haltebolzen 14, 15 ragen. In einem weiteren Schritt gemäß Fig. 6 bzw. 7 wird nun das in Fig. 5 gezeigte Peltierelement 6 mit seiner im Kühlbetrieb kühlen Seite an die Rückseite des DMD-Elementes 3 wärmeleitend aufgelegt, wobei die zwei Federkontakte 11 a,b an der einen Kontaktfläche 8 und die zwei Federkontakte 12 a,b an der anderen Kontaktfläche 9 des Kontaktträgers 13 des Peltierelements 6 anliegen. Schließlich wird - Fig. 8 - die Anordnung durch Aufsetzen des Kühlkörpers 7 komplettiert, wobei der Kühlkörper dann in wärmeleitendem Kontakt mit der im Kühlbetrieb heißen Seite des Peltierelements 6 steht. Die Schraubenfedern 18, 19 werden auf die Haltebolzen 14, 15 aufgesteckt und die Schraubbolzen 20, 21 mit den Anschlägen 16, 17 für die Schraubenfedern 18, 19 werden in die Haltebolzen 14, 15 eingeschraubt, sodass die Anordnung durch die Kraft der Schraubenfedern 18, 19 zusammengepresst wird.

Die Leiterplatte 5 kann zweckmäßigerweise eine Ansteuerelektronik enthalten, welche den Strom für das Peltierelement 6 liefert und je nach der Temperatur des DMD-Elementes 3 diesen Strom regelt, sodass das Peltierelement dementsprechend das DMD-Element kühlt bzw. gegebenenfalls auch heizt. Im letzteren Fall sind natürlich die heiße Seite und die kühle Seite des Peltierelements vertauscht. Das DMD-Element liefert zweckmäßigerweise ein Temperatursignal, sodass ein getrennter Temperaturfühler nicht erforderlich ist.

Um allfällige EMV-Probleme zu vermeiden bzw. zu verringern, sind in den Fig. 4, 6 und 7 gut ersichtliche Kontaktfedern 24 vorgesehen, deren Funktion in der Herstellung von Masseverbindungen zwischen der Leiterplatte 5 und dem Kühlkörper 7 liegt. Die Form dieser Federn 24 ist im gezeigten Beispiel im Wesentlichen S-förmig.

Die in den Ansprüchen verwendeten Bezugszeichen sollen lediglich die Lesbarkeit der Ansprüche und das Verständnis der Erfindung erleichtern und haben keinesfalls einen den Schutzumfang der Erfindung beeinträchtigenden Charakter.

### Liste der Bezugszeichen

- 1: DMD-Modul
- 2: Halterahmen
- 3: DMD-Element
- 4: Sockel
- 5: Leiterplatte
- 6: Peltierelement
- 7: Kühlkörper
- 8, 9: Kontaktflächen
- 10: Ausnehmung
- 11 a,b: Federkontakte
- 12 a,b: Federkontakte
- 13: Kontaktträger
- 14, 15: Haltebolzen
- 16, 17: Anschläge
- 18, 19: Schraubenfedern
- 20, 21: Schraubbolzen
- 22, 23: Bohrungen
- 24: Kontaktfedern

## Patentansprüche

1. DMD-Modul (1), bestehend aus einem Halterahmen (2), einem in diesen eingesetzten DMD-Element (3), einem plattenförmigen Peltierelement (6), welches mit einer Seite an der Rückseite des DMD-Elementes wärmeleitend anliegt und elektrische Anschlüsse aufweist, einer Leiterplatte (5) und einem Kühlkörper (7), welcher in wärmeleitendem Kontakt mit der anderen Seite des Peltierelements steht, wobei die Leiterplatte (5) zwischen dem DMD-Element (3) und dem Kühlkörper (7) angeordnet ist und eine Ausnehmung (10) für das Peltierelement (6) aufweist
**dadurch gekennzeichnet, dass** zur elektrischen Verbindung des Peltierelements mit der Leiterplatte Federkontakte (11 a,b, 12 a,b) und diesen zugeordnete Kontaktflächen (8, 9) vorhanden sind, wobei bei zusammengesetztem DMD-Modul die Federkontakte federnd an den Kontaktflächen anliegen, und dass von dem Halterahmen (2) zumindest zwei, die Leiterplatte (5) sowie den Kühlkörper (7) durchsetzende Haltebolzen (14, 15) abstehen, welche an ihren freien Enden Anschläge (16, 17) für Schraubenfedern (18,19) aufweisen, die zwischen den Anschlägen und dem Kühlkörper liegen und den Kühlkörper (7), das Peltierelement (6) und das DMD-Element (3) federnd zusammenhalten, wobei die Anordnung durch die Kraft der Schraubenfedern (18, 19) zusammengepresst wird, wobei die elektrischen Anschlüsse des Peltierelements (6) die zumindest zwei elektrischen Kontaktflächen (8, 9) umfassen und auf der Leiterplatte (5) zur Stromzuführung an das Peltierelement (6) die zumindest zwei Federkontakte (11 a,b, 12 a,b) angeordnet sind, wobei die zumindest zwei elektrischen Kontaktflächen (8, 9) auf einem von dem Peltierelement (6) vorspringenden Kontaktträger (13) angeordnet sind,
wobei der Halterahmen (2) im Bereich des DMD-Elements (3) eine Öffnung aufweist.

2. DMD-Modul nach einem der Anspruch 1, **dadurch gekennzeichnet, dass** die elektrischen Anschlüsse des Peltierelements (6) zwei elektrische Kontaktflächen (8, 9) umfassen und jeder Kontaktfläche zwei Federkontakte (11 a,b, 12 a,b) zugeordnet sind.

3. DMD-Modul (1) nach Anspruch 2, **dadurch gekennzeichnet, dass** die Anschläge (16, 17) je am äußeren Ende von Schraubbolzen (20, 21) sitzen, die in die Haltebolzen (14, 15) eingeschraubt sind.

## Claims

1. DMD module (1), consisting of a holding frame (2), a DMD element (3) inserted therein, a plate-shaped Peltier element (6), which bears with one side against the rear side of the DMD element in a thermally conductive manner and has electrical connections, a printed circuit board (5) and a heat sink (7), which is in thermally conductive contact with the other side of the Peltier element,
wherein
the printed circuit board (5) is arranged between the DMD element (3) and the heat sink (7) and has a recess (10) for the Peltier element (6), **characterized in that** spring contacts (11 a, b, 12 a, b) and contact surfaces (8, 9) are provided for the electrical connection of the Peltier element to the printed circuit board, the spring contacts bearing resiliently against the contact surfaces when the DMD module is assembled, and **in that** at least two retaining bolts (14, 15) protrude from the retaining frame (2) and pass through the printed circuit board (5) and the heat sink (7), which retaining bolts have stops (16, 17) for helical springs (18, 19) which lie between the stops and the heat sink and resiliently hold the heat sink (7), the Peltier element (6) and the DMD element (3) together, the arrangement being pressed together by the force of the coil springs (18, 19), the electrical connections of the Peltier element (6) comprising the at least two electrical contact surfaces (8, 9) and the at least two spring contacts (11 a,b, 12 a,b) are arranged on the printed circuit board (5) for supplying current to the Peltier element (6), the at least two electrical contact surfaces (8, 9) being arranged on a contact carrier (13) projecting from the Peltier element (6),
wherein the holding frame (2) has an opening in the region of the DMD element (3).

2. DMD module according to one of the claims 1, **characterized in that** the electrical connections of the Peltier element (6) comprise two electrical contact surfaces (8, 9) and two spring contacts (11 a, b, 12 a, b) are assigned to each contact surface.

3. DMD module (1) according to claim 2, **characterized in that** the stops (16, 17) are each located at the outer end of screw bolts (20, 21) which are screwed into the retaining bolts (14, 15).

## Revendications

1. Module DMD (1), constitué d'un cadre de support (2), d'un élément DMD (3) inséré dans celui-ci, d'un élément Peltier (6) en forme de plaque, qui s'appuie par un côté sur la face arrière de l'élément DMD en conduisant la chaleur et présente des connexions électriques, d'une carte imprimée (5) et d'un corps de refroidissement (7), qui est en contact de conduction thermique avec l'autre côté de l'élément Peltier,
où
la carte imprimée (5) est disposée entre l'élément DMD (3) et le corps de refroidissement (7) et présente un évidement (10) pour l'élément Peltier (6), **caractérisé en ce que** pour la liaison électrique de l'élément Peltier avec la carte imprimée, des contacts à ressort (11 a,b, 12 a,b) et des surfaces de contact (8, 9), les contacts à ressort s'appliquant de manière élastique contre les surfaces de contact lorsque le module DMD est assemblé, et **en ce qu'**au moins deux boulons de maintien (14, 15) traversant la carte imprimée (5) ainsi que le corps de refroidissement (7) dépassent du cadre de maintien (2), lesquels boulons de maintien comportent à leurs extrémités libres des butées (16, 17) pour des ressorts hélicoïdaux (18, 19) qui se trouvent entre les butées et le corps de refroidissement et qui maintiennent ensemble de manière élastique le corps de refroidissement (7), l'élément Peltier (6) et l'élément DMD (3), l'ensemble étant comprimé par la force des ressorts hélicoïdaux (18, 19), les connexions électriques de l'élément Peltier (6) comprenant les au moins deux surfaces de contact électrique (8, 9) et les au moins deux contacts à ressort (11 a, b, 12 a, b) sont disposés sur la carte à circuits imprimés (5) pour l'alimentation en courant de l'élément Peltier (6), les au moins deux surfaces de contact électriques (8, 9) étant disposées sur un support de contact (13) faisant saillie de l'élément Peltier (6),
le cadre de support (2) présentant une ouverture dans la zone de l'élément DMD (3).

2. Module DMD selon l'une des revendications 1, **caractérisé en ce que** les connexions électriques de l'élément Peltier (6) comprennent deux surfaces de contact électrique (8, 9) et que deux contacts à ressort (11 a, b, 12 a, b) sont associés à chaque surface de contact.

3. Module DMD (1) selon la revendication 2, **caractérisé en ce que** les butées (16, 17) se trouvent chacune à l'extrémité extérieure de boulons filetés (20, 21) qui sont vissés dans les boulons de retenue (14, 15).
